Europäisches Patentamt

European Patent Office

Office européen des brevets

(19)

(11) Numéro de publication: **0 308 301**

**A1**

(12) **DEMANDE DE BREVET EUROPEEN**

(21) Numéro de dépôt: **88402267.4**

(22) Date de dépôt: **08.09.88**

(51) Int. Cl.⁴: **H 04 M 3/54**
**H 04 M 3/42**

(30) Priorité: **18.09.87 FR 8712985**

(43) Date de publication de la demande:
**22.03.89 Bulletin 89/12**

(84) Etats contractants désignés:
**AT BE CH DE ES GB GR IT LI LU NL SE**

(71) Demandeur: **APPLICATIONS ELECTRONIQUES TECHNIQUES AVANCEES "A.E.T.A."**
**62 à 70, rue Blanchard**
**F-92363 Fontenay aux Roses (FR)**

(72) Inventeur: **Fric, Jacques**
**5, rue Corneille**
**F-91230 Montgeron (FR)**

(74) Mandataire: **Plaçais, Jean-Yves et al**
**Cabinet Netter 40, rue Vignon**
**F-75009 Paris (FR)**

(54) **Installation téléphonique à liaison hertzienne.**

(57) L'invention concerne une installation téléphonique comprenant un PABX (4) relié au réseau téléphonique, des postes intérieurs reliés par des liaisons intérieures (6) au PABX et des moyens additionnels d'intercommunication branchés entre le PABX (4) et des postes intérieurs privilégiés (2).

Selon la caractéristique principale de l'invention :

- lesdits moyens additionnels d'intercommunication comprennent un module de traitement (8) associé à chaque poste intérieur privilégié (2), muni d'un émetteur (16)-récepteur (18) ainsi que d'une antenne (20), pour l'échange de signalisation entre les postes privilégiés (2), et

- chaque poste privilégié (2) comporte au moins une touche supplémentaire dont l'actionnement met en marche ledit module (8) pour:

- détecter un courant de sonnerie délivré par le PABX (4) vers ledit poste privilégié (2),

- émettre en réponse à ce courant de sonnerie une signalisation sollicitant automatiquement et avec supervision au moins un autre poste pour intercepter l'appel.

FIG.1

**Description**

## INSTALLATION TELEPHONIQUE A LIAISON HERTZIENNE.

L'invention concerne l'amélioration du traitement des appels téléphoniques en vue notamment de leur interception automatique à partir de l'un des postes intérieurs d'une installation téléphonique accompagnée d'une supervision de ladite interception et de leur dérivation vers d'autres postes intérieurs désignables à partir du poste intercepteur.

On connaît déjà des installations téléphoniques dans lesquelles des postes intérieurs simples sont reliés par des lignes intérieures à un autocommutateur privé relié lui-même au réseau téléphonique. Des moyens additionnels d'intercommunication branchés entre l'autocommutateur privé et des postes privilégiés procurent auxdits postes privilégiés des fonctions téléphoniques évoluées telles que le filtrage des appels téléphoniques d'un poste vers un autre.

On entend ici par filtrage, l'opération par laquelle les communications d'un poste sont systématiquement arrêtées et envoyées vers un autre poste afin de filtrer lesdites communications. On appelle ici un poste simple un poste du type par exemple S63 utilisable sur une ligne PTT ordinaire. Le filtrage est dit supervisé quand on dispose sur le poste filtreur de toutes les informations relatives à cette fonction d'interception (identité du poste filtreur, états d'occupation des autres postes) et ceci préalablement à toute manoeuvre du filtreur.

Jusqu'à présent, les moyens additionnels d'intercommunication forment un central téléphonique privé intercalé entre le PABX et les postes privilégiés. Ces postes privilégiés comprennent des touches d'appel en privé associées chacune à un correspondant intérieur pour permettre la communication vers lesdits correspondants ainsi que des touches de fonctionnement pour permettre notamment l'interception d'appels, la mise en garde et le transfert dudit appel. Plusieurs lignes du réseau, via l'autocommutateur privé tel que le PABX (pour "Private Automatic Branch Exchange"), sont disponibles sur chaque poste intérieur pour les communications vers l'extérieur. Des moyens de visualisation et des moyens d'affichage le cas échéant indiquent l'état d'occupation des postes intérieurs ainsi que l'état d'occupation des lignes réseau.

Une telle installation permet de relier toutes les personnes d'un même service ou d'un même département géographique les unes aux autres (bien entendu dans la limite des touches d'appels privés disponibles) afin qu'elles communiquent entre elles et avec l'extérieur. Cette installation permet également le filtrage des appels téléphoniques d'un poste vers un autre tel que le couple patron-secrétaire dans lequel un poste initial (secrétaire) intercepte les appels téléphoniques destinés à l'ensemble des correspondants de l'installation et dérive ensuite les appels vers au moins un autre poste (patron).

Ce genre d'installation a l'inconvénient d'être onéreux, surtout lorsqu'il comprend peu de postes privilégiés car alors le coût du système central et le coût unitaire desdits postes accompagnés chacun de sa ligne intérieure deviennent très élevés.

Par ailleurs, le cablâge des lignes intérieures reliant d'une part le PABX aux moyens additionnels d'intercommunication et d'autre part les moyens additionnels d'intercommunication aux postes intérieurs est onéreux puisque ces lignes intérieures sont constituées de plusieurs paires téléphoniques (généralement trois) dont le montage pose un problème d'implantation souvent difficile à résoudre et dont le déménagement est rarement facile à réaliser.

Il existe également des installations téléphoniques dans lesquelles des liaisons supplémentaires véhiculant des signaux informatiques relient les postes intérieurs les uns aux autres. Des capteurs de signaux informatiques, logés dans chaque poste, permettent d'échanger via lesdites liaisons numériques supplémentaires des signalisations relatives notamment à l'état de filtrage ainsi qu'à l'état d'occupation des postes. Les inconvénients d'une telle installation sont encore le problème causé par le câblage des liaisons supplémentaires, le coût de chaque poste qui reste élevé et enfin le manque d'ergonomie des logiciels gérant les échanges des signaux informatiques.

L'invention a pour but de remédier à ces inconvénients. A cette fin, elle propose une installation téléphonique permettant d'augmenter les facultés téléphoniques de ladite installation par une liaison hertzienne véhiculant des signalisations permettant notamment le filtrage des appels téléphoniques d'un poste intérieur vers d'autres accompagné d'une supervision dudit filtrage. Cette installation est particulièrement simple et fiable et permet d'accroître les capacités des postes intérieurs sans entraîner un câblage supplémentaire des lignes intérieures entre lesdits postes intérieurs.

D'une manière plus précise, l'invention porte sur une installation téléphonique comprenant :

- un autocommutateur privé, en particulier un PABX, relié au réseau téléphonique et équipé d'une fonction d'interception d'appel,
- des postes intérieurs reliés par des lignes intérieures au PABX,
- des moyens additionnels d'intercommunication branchés entre le PABX et des postes intérieurs privilégiés pour procurer des fonctions téléphoniques évoluées.

Selon une définition générale de l'invention, lesdits moyens additionnels d'intercommunication comprennent un module de traitement associé à chaque poste intérieur privilégié, muni d'un émetteur-récepteur ainsi que d'une antenne, pour l'échange de signalisations entre les postes privilégiés, et chaque poste privilégié comporte au moins une touche supplémentaire dont l'actionnement met en marche ledit module pour :

- détecter un courant de sonnerie délivré par le PABX vers ledit poste privilégié,
- émettre en réponse à ce courant de sonnerie une signalisation sollicitant au moins un autre poste pour intercepter l'appel.

L'installation téléphonique selon l'invention peut être mise en place sur une installation téléphonique classique, préexistante et équipée d'un PABX. Dans ce cas, l'amélioration des appels téléphoniques s'effectue en remplaçant les postes intérieurs simples par des postes privilégiés selon l'invention ou en insérant un module de traitement selon l'invention dans lesdits postes simples. Ce remplacement est possible puisque la connectique et les interfaces électriques des postes simples sont compatibles avec celles des postes privilégiés selon l'invention.

Plus particulièrement, ladite signalisation sollicite un poste dérivé, désignable à partir des touches du poste privilégié initial, par d'autres signalisations radioélectriques.

Selon une autre caractéristique de l'invention, chaque poste privilégié comprend en outre des organes de visualisation commandés en réponse auxdites signalisations radioélectriques pour indiquer l'état de filtrage de chacun des postes privilégiés de l'installation ainsi que la sollicitation dudit poste dérivé.

Selon un mode de réalisation préféré de l'installation selon l'invention, le module de traitement de chaque poste privilégié comprend en outre des moyens de détection de courant d'occupation de ligne propres en réponse à ce courant à commander les organes de visualisalisation dudit poste pour indiquer son occupation et à émettre des signalisations radioélectriques pour indiquer l'état d'occupation dudit poste à chacun des autres postes privilégiés de l'installation.

Selon un aspect de l'invention, les signalisations radioélectriques sont émises et reçues par l'émetteur-récepteur de chaque poste privilégié selon un protocole de transmission avec multiplexage par division temporelle dans lequel un créneau de communication particulier est affecté à chacun des postes privilégiés.

L'ergonomie de l'interception des appels téléphoniques est ainsi obtenue par l'utilisation de touches dédiées à des fonctions téléphoniques évoluées, par la visualisation d'informations nécessaires à la prise de décision d'intercepter l'appel et par la transmission desdites informations par liaison hertzienne.

D'autres caractéristiques et avantages de l'invention apparaîtront à l'examen de la description détaillée ci-après, et des dessins annexés sur lesquels :

    - la figure 1 représente une vue schématique du module de traitement branché entre le PABX et un poste intérieur de l'installation selon l'invention;

    - la figure 2 représente schématiquement un exemple de boîtier d'un poste intérieur de l'installation selon l'invention;

    - la figure 3 représente schématiquement la partie centrale du boîtier de la figure 2;

    - les figures 4 et 5 représentent des chronogrammes illustrant le protocole de transmission avec multiplexage par division temporelle des signalisations radioélectriques selon l'invention;

    - la figure 6 est un algorithme représentant symboliquement le fonctionnement de l'installation dans le cas d'un appel filtré.

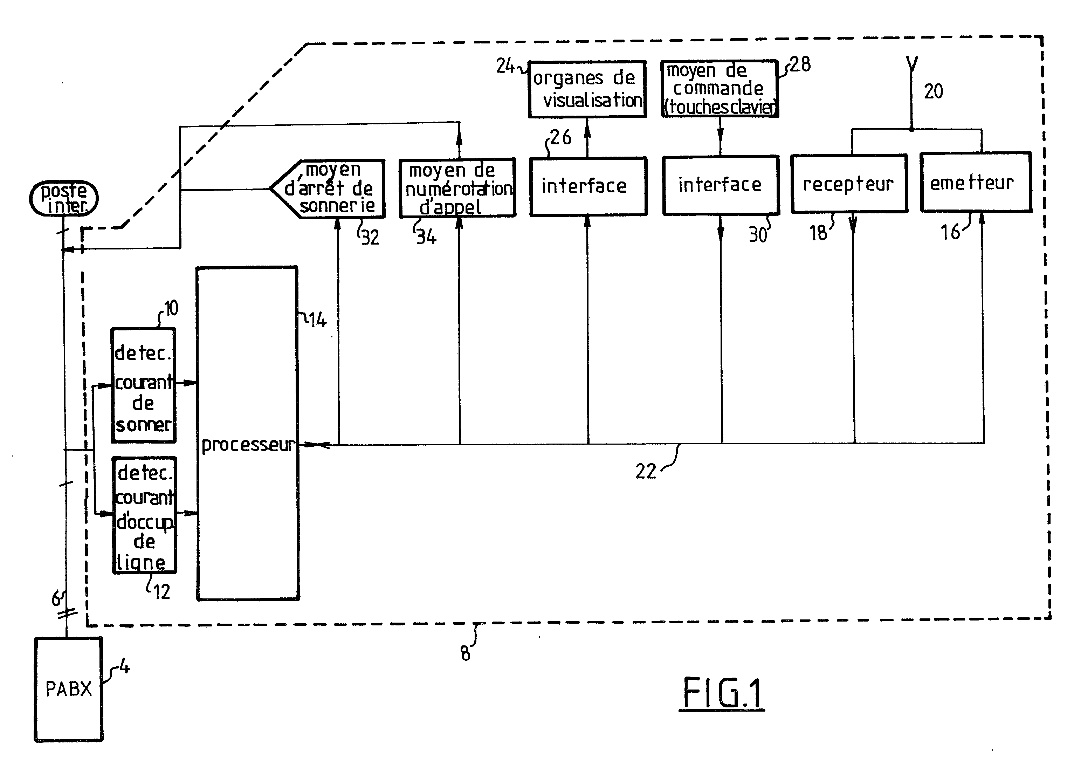

Sur la figure 1, une installation téléphonique selon l'invention comprend plusieurs postes intérieurs tels que le poste 2, reliés chacun à un autocommutateur privé 4 du type PABX par une ligne intérieure 6 respective. Pour faciliter la compréhension de la structure de l'installation, on a représenté seulement un poste accompagné de sa ligne intérieure le reliant au PABX. Le PABX est de type connu, il est relié au réseau téléphonique (non représenté) et comprend notamment des fonctions téléphoniques permettant les interceptions d'appel, les mises en garde et les transferts d'appel. La ligne intérieure 6 est constituée d'une paire téléphonique de type connu.

Un module 8 est branché entre le PABX et le poste intérieur 2 pour procurer des fonctions téléphoniques évoluées telles que le filtrage des appels d'un poste vers l'autre sans entraîner un câblage supplémentaire de lignes intérieures entre les postes intérieurs selon l'invention. Le module 8 est avantageusement logé dans le poste 2. Toutefois, il peut être branché conjointement avec la ligne intérieure 6 sur une prise de type gigogne connectée au réseau téléphonique.

Le module 8 comprend des moyens de détection de courant de sonnerie, lequel courant de sonnerie est délivré par le PABX lorsque le poste 2 est appelé ainsi que des moyens de détection de courant d'occupation de ligne 12, lequel courant d'occupation de ligne est délivré lorsque le combiné du poste 2 est décroché. Les moyens de détection 10 et 12 comprennent chacun une entrée branchée sur la paire téléphonique 6 véhiculant notamment lesdits courants et chacun un sortie reliée à un processeur 14.

Le module 8 est muni d'un émetteur 16-récepteur 18 ainsi que d'une antenne 20. Le processeur 14 envoie à l'émetteur 16, via le bus de liaison bidirectionnelle 22 qui les relie, des impulsions de commande déclenchées en réponse à l'actionnement des moyens de détection 10 et 12 en présence du courant de sonnerie respectivement du courant d'occupation de ligne.

L'émetteur 16 en réponse à ces impulsions de commande rayonne par l'intermédiaire de l'antenne 20 des signalisations radioélectriques que l'on décrira plus en détail ci-après, relatives notamment à l'actionnement des moyens de détection 10 et 12.

Le récepteur 18 capte par l'intermédiaire de l'antenne 20 les signalisations radioélectriques émises par un émetteur d'un poste intérieur de l'installation identique au poste 2, et les transmet via le bus de liaison 22 au processeur 14. Ce dernier traite les signalisations radioélectriques et envoie en réponse auxdites signalisations des nouvelles impulsions de commande.

L'émetteur-récepteur est de type connu, tels que ceux utilisés dans la Télécommande du système d'assistance aux personnes isolées.

Des organes de visualisation 24, par l'intermédiaire de moyens d'interfaçage 26 et via le bus de liaison 22, reçoivent les impulsions de commande délivrées par le processeur 14. En réponse à ces impulsions, les organes de visualisation 24 commutent pour indiquer des états de visualisation des postes de l'installation que l'on décrira plus en détail ci-après, en relation avec les signalisations radioélectriques émises et reçues par chaque poste.

Des moyens de commande 28 sont constitués par les touches classiques du clavier du poste 2 ainsi que par des touches supplémentaires 28 que l'on décrira ci-après. L'actionnement de l'une de ces touches classiques ou supplémentaires, envoie par l'intermédiaire des moyens d'interfaçage 30 et via le bus de liaison 22 des instructions codées correspondant au processeur 14.

En réponse auxdites instructions codées, le processeur 14 délivre des impulsions de commande vers l'émetteur pour émettre des signalisations radioélectriques en relation avec l'actionnement desdites touches ainsi que vers les organes de visualisation pour indiquer ledit actionnement des touches.

Le module 8 comprend encore des moyens d'arrêt de sonnerie 32 comprenant une entrée reliée via le bus 22 au processeur 14 et une sortie reliée au timbre du poste intérieur 2. Sous la commande des impulsions de commande fournies par le processeur 14, en réponse au courant de sonnerie détecté par les moyens de détection 10, le timbre du poste 2 est inhibé.

Le module 8 comprend enfin des moyens de numérotation d'appel 34 comprenant une entrée reliée au processeur 14 via le bus 22 et une sortie branchée sur la paire téléphonique 6. Sous la commande des impulsions de commande fournies par le processeur 14 en réponse aux instructions codées délivrées par l'actionnement des touches des moyens de commande, le numéro du poste sélectionné est envoyé sur la paire téléphonique 6. Les moyenss e numérotation 34 sont de type connu tels que les systèmes décimaux ou systèmes à multifréquence.

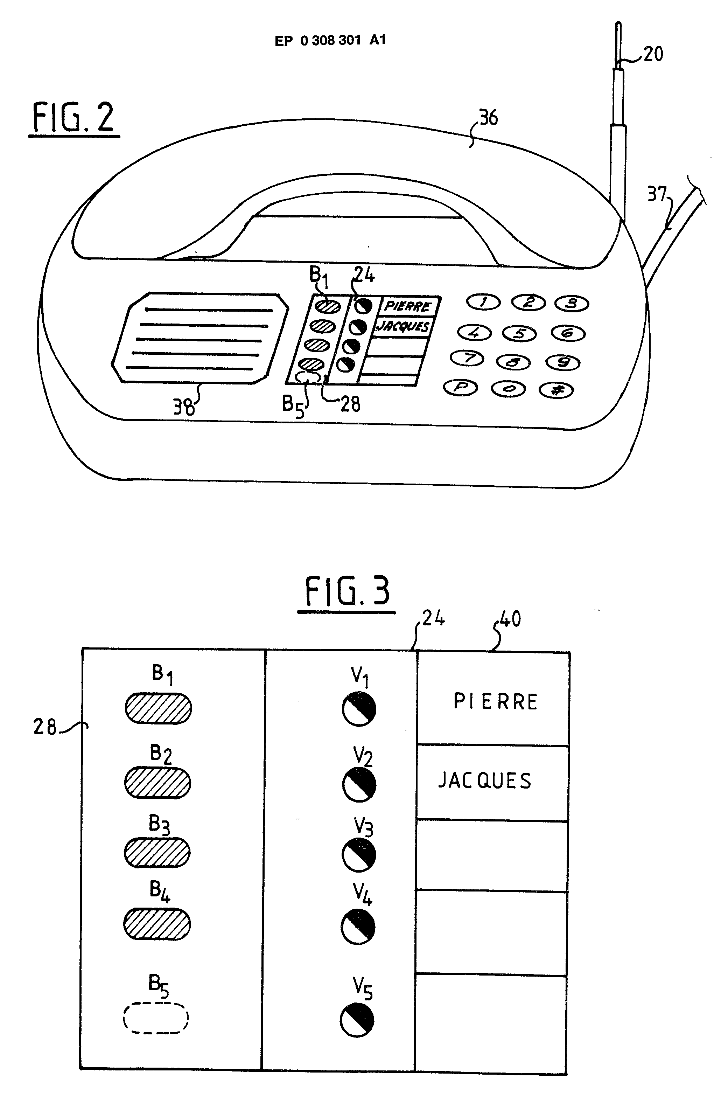

Sur la figure 2, on a représenté un exemple de boîtier du poste 2 contenant le module 8 selon l'invention. Le poste 2 a un boîtier sensiblement identique à celui d'un poste de type connu comme celui vendu par exemple par la Société MATRA TELECOM sous le nom de "Declic". Le boîtier du poste 2 diffère de celui du poste "Declic" que par l'ajout de l'antenne 20, des organes de visualisation 24 et des touches supplémentaires.

L'antenne 20 est placée sur un côté du poste 2 près du combiné 36. L'émetteur 16-récepteur 18 associé à cette antenne 20 est logé à l'intérieur du poste 2. Un cordon d'alimentation 37 est disponible. On retrouve sur la droite de ce boîtier, les touches numériques 0 à 9 classiques, la touche de prise de ligne sans décrochage du combiné P et la touche dièse pour la numérotation abrégée. Sur la gauche, un afficheur 38 de type connu tel qu'un afficheur à cristaux liquides est disponible le cas échéant pour afficher des informations relatives aux fonctions téléphoniques du poste 2.

On se réfère maintenant à la figure 3 qui illustre d'une façon plus détaillée la partie centrale du boîtier du poste 2 selon l'invention.

Sur la partie centrale du boîtier du poste 2, on voit les touches supplémentaires B disposées en colonne et individualisées en $B_1$ à $B_5$ dans le cas où l'installation comprend quatre postes privilégiés intérieurs reliés les uns aux autres par une liaison hertzienne dont on décrira le protocole de transmission ci-après. La touche $B_5$ est une touche optionnelle, son actionnement permet par exemple d'établir la mise en garde d'un appel par simple appui.

Les touches supplémentaires B font partie des moyens de commande 28 au même titre que les touches classiques décrites en référence à la figure 2. A droite des touches supplémentaires B sont disposés des organes de visualisation 24 ainsi que des étiquettes 40. Les organes de visualisation 24 comprennent des indicateurs lumineux V disposés en colonne, individualisés en $V_1$ à $V_5$ et associés chacun à une touche supplémentaire B correspondante et à une étiquette 40 sur laquelle est porté le nom du correspondant auquel est attribuée ladite touche et l'indicateur lumineux. Il est clair que le nombre de touches supplémentaires, d'indicateurs lumineux ainsi que d'étiquettes n'est pas limité à cinq et que dans la pratique, le boîtier peut comporter plus de tels éléments, et que la visualisation des informations peut se faire par d'autres moyens (écrans à cristaux liquides par exemple).

La commutation de l'indicateur lumineux $V_5$ peut être utilisée pour indiquer la mise en garde d'un appel.

Chaque indicateur lumineux V peut par exemple avoir des colorations différentes, par exemple en rouge et en vert.

La commutation des organes de visualisation 24, sous la commande des impulsions de commande décrites en référence à la figure 1, permet de superviser l'interception des appels téléphoniques d'un poste vers l'autre et d'indiquer plusieurs états téléphoniques de l'installation, notamment l'état de filtrage des postes ainsi que leur état d'occupation. Arbitrairement on peut définir un code de visualisation gérant la commutation desdits indicateurs lumineux selon le tableau suivant.

| vert allumé fixe | poste libre et filtré |
|---|---|
| éteint | poste libre non filtré |
| vert clignotant | poste en sonnerie filtré |
| rouge clignotant | poste en sonnerie réelle |
| rouge fixe | poste décroché |

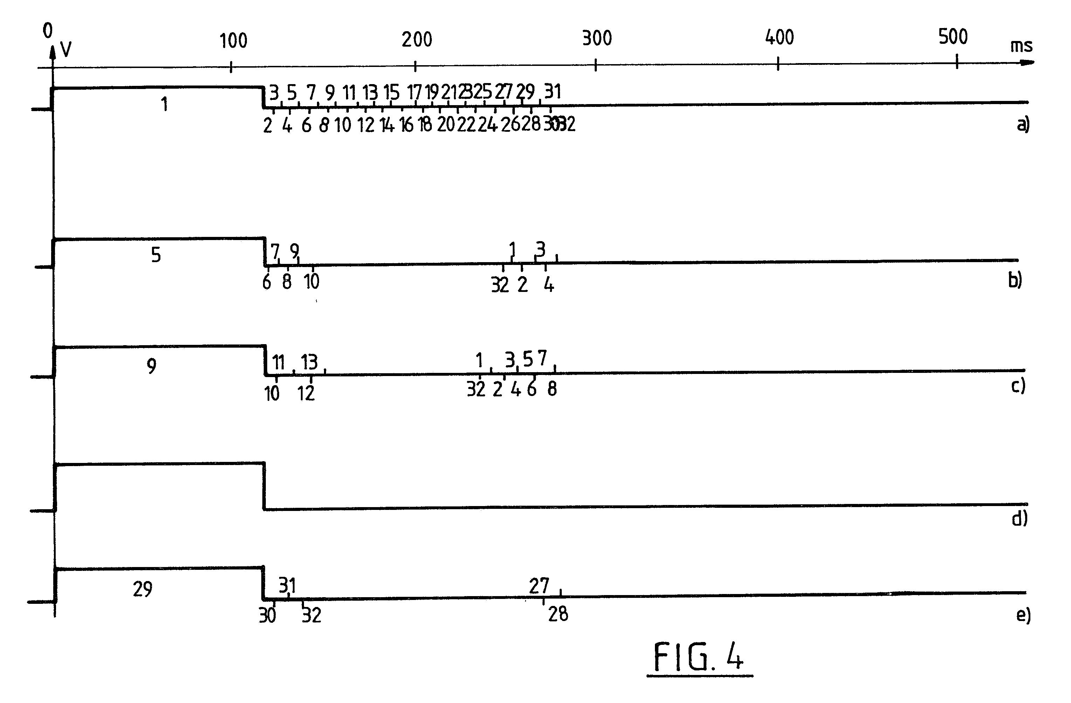

On fait maintenant référence à la figure 4 qui illustre le protocole de transmission hertzienne avec multiplexage par division temporelle dans lequel un créneau de communication particulier est affecté à chacun des postes privilégiés.

On a représenté l'axe des temps en millisecondes sur l'axe des abscisses, et le niveau des créneaux de communication sur l'axe des ordonnées.

Avantageusement, le canal de transmission radioélectrique peut être partagé par plusieurs installations téléphoniques du type décrit ci-dessus et comprenant chacune par exemple quatre postes intérieurs reliés les uns aux autres par une liaison hertzienne selon l'invention. Par exemple, huit installations différentes de quatre postes intérieurs chacune peuvent partager ledit canal de transmission radioélectrique affecté à ladite liaison hertzienne. Cette liaison est celle réservée par exemple à la télécommande, c'est-à-dire une liaison de courte durée et de bande appartenant aux fréquences, par exemple de 27 MHZ, 225 MHZ ou 400 MHZ.

Sur la partie a) de la figure 4, on a représenté la trame du canal de transmission radioélectrique qui a une durée de l'ordre de 500 millisecondes. La trame est déclenchée initialement de façon arbitraire par l'émetteur du poste désigné "poste filtreur" de l'installation A. Le créneau de communication affecté audit poste filtreur portant arbitrairement le numéro 1 a une durée de l'ordre de 120 millisecondes. Cette durée de communication est attribuée aux postes émettant un message et permet de transmettre des informations à 300 bits par exemple.

Des fenêtres de communication sont affectées à chacun des postes desdites installations, c'est-à-dire aux 32 postes. Ces fenêtres offrent la possibilité à chacun des postes d'émettre chacun leur tour, c'est-à-dire seulement au moment de la trame radio où la fenêtre de communication affectée audit poste désirant émettre est "proposée". Ces fenêtres de communication ont une durée de l'ordre de 5 millisecondes. L'ordre d'émission est établi arbitrairement par le rang occupé par chaque poste. Ainsi, le poste n° 6 a la possibilité d'émettre seulement lorsque le temps correspondant aux cinq premières fenêtres est écoulé et lorsque la fenêtre affectée au poste n° 6 est proposée.

Dans le cas d'une installation comprenant quatre postes intérieurs, les messages radio contiennent par exemple seize signaux permettant de signaler l'état de filtrage ainsi que l'état d'occupation des postes intérieurs. Ces seize signaux se décomposent de la façon suivante:

- 4 signaux pour indiquer chacun l'appel respectif d'un des quatre postes et l'interception par le filtreur;
- 4 signaux pour indiquer l'état d'occupation respectif des quatre postes;
- 4 signaux pour indiquer l'état de non-occupation respectif des quatre postes;
- 3 signaux pour indiquer les appels respectifs dans le groupe; et
- 1 signal pour indiquer la mise en veilleuse du filtreur.

Ces seize signaux sont transmis sous la forme de bits et sont élaborés par le processeur 14. Ils peuvent correspondre aux signaux du code complet à multifréquence.

Sur les parties b, c, d et e de la figure 4, on a représenté les trames radio d'une durée de 500 millisecondes chacune, déclenchées chacune à tour de rôle respectivement par les postes filtreurs (postes 5, 9, ..., 29) des autres installations (B, C, ..., H). A la suite du déclenchement de la première trame par le poste filtreur n° 1 de l'installation A accompagné d'un créneau d'une durée de 120 millisecondes, les fenêtres de communication d'une durée de 5 millisecondes chacune défilent chacune à leur tour pour autoriser à un poste particulier d'émettre un message radio à l'instant de la trame où sa fenêtre de communication est "proposée".

Si aucun poste n'émet pendant les 500 millisecondes de la première trame, la trame suivante est déclenchée par le poste filtreur (n° 5) de l'installation B.

Si à nouveau aucun poste n'émet pendant les 500 millisecondes de la seconde trame, la trame suivante est déclenchée par le poste filtreur 2 de l'installation suivante C.

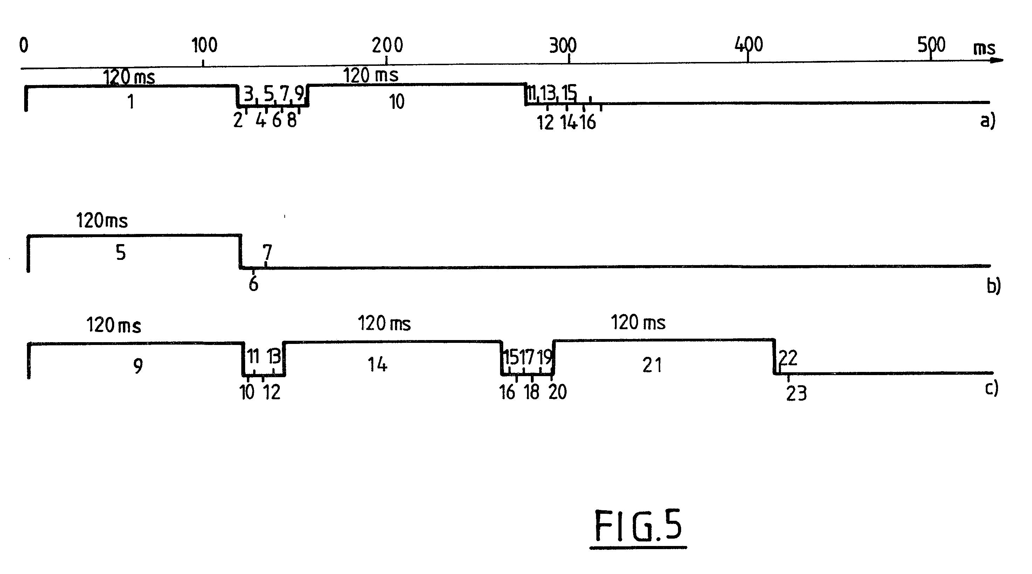

Sur la partie a de la figure 5, on a représenté le cas où la trame est déclenchée par le poste filtreur (poste 1) de l'installation A. Les fenêtres de communication défilent jusqu'à celle du poste n° 10 où ledit poste n° 10 désire émettre un message radio. A cet instant, un créneau de communication d'une durée de l'ordre de 120 millisecondes (115 + 5) est affecté au poste 10. Les postes suivants doivent attendre leur tour et prendre en compte cette émission pour recaler leurs fenêtres de communication respectives (décalage de 115 millisecondes).

On note qu'un nombre maximum de trois messages radio peut être ainsi émis pendant chaque trame de 500 millisecondes. Par conséquent, lorsque trois messages sont émis pendant une même trame, il faut attendre la trame suivante, déclenchée par le poste filtreur de l'installation suivante, pour émettre un message.

Sur la partie b de la figure 5, on a représenté la trame suivante qui est donc déclenchée par le poste n° 5 de l'installation B.

Sur la partie c de la figure 5, on a représenté la trame déclenchée par le poste filtreur n° 9 dans laquelle les postes 14 et 21 émettent un message radio.

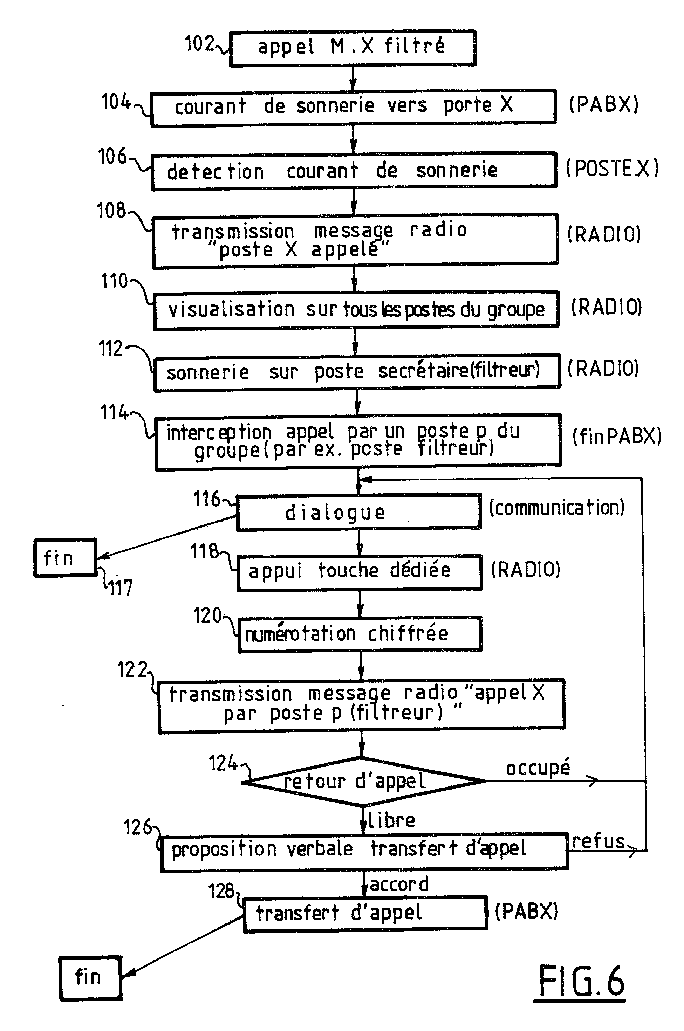

Sur la figure 6, on a représenté l'algorithme qui illustre symboliquement le fonctionnement de l'installation.

La référence 102 désigne symboliquement l'étape dans laquelle le poste intérieur de Monsieur X est appelé. Les communications de ce Monsieur X (patron) sont filtrées par un poste filtreur (secrétaire). Pour être déclaré filtré, Monsieur X a initialement actionné la touche supplémentaire B dédiée au filtrage des communications de son poste X par le poste filtreur (secrétaire) de l'installation. Le PABX envoie un courant de sonnerie relatif à cet appel vers le poste X (étape 104). Ce courant de sonnerie est détecté par les moyens de détection du module 8 associé au poste X (étape 106). Le processeur 14 associé au poste X envoie une signalisation radio-électrique contenant le message radio selon le protocole radio décrit ci-dessus. Ce message radio contient par exemple le signal correspondant à l'appel du poste X (étape 108). La signalisation radioélectrique est captée par l'ensemble des postes de l'installation (étape 110) et sollicite les organes de visualisation de chacun des postes pour commuter celui attribué à Monsieur X en vue d'indiquer l'appel de son poste. Par exemple, l'indicateur lumineux en regard de l'étiquette portant le nom de Monsieur X s'allume en vert par intermittence selon le code de visualisation défini en référence à la figure 2. Le poste de Monsieur X est signalé en appel pour les autres postes de l'installation.

La sonnerie du poste X est inhibée par les moyens de détection de courant de sonnerie via les moyens d'arrêt de sonnerie 32 dudit poste X. Le cas échéant, la sonnerie du poste X est activée immédiatement ou après une temporisation selon l'application demandée. La sonnerie du poste filtreur (secrétaire) est activée si ce poste n'est pas mis en veille (étape 112). Si le poste de la secrétaire est libre, l'actionnement de la touche supplémentaire située en regard de l'indicateur lumineux indiquant l'appel de Monsieur X provoque l'interception d'appel (étape 114). Dans ce cas, le poste de Monsieur X devient libre et les ampoules de l'indicateur lumineux relatif à ce poste sont éteintes. Si le poste de la secrétaire n'est pas libre, une mise en garde de la communication est nécessaire avant l'interception d'appel.

Le dialogue s'établit entre l'appelant et la secrétairec (étape 116) et peut prendre immédiatement fin (étape 117).

A partir du poste filtreur, l'appel du filtré s'effectue par l'actionnement de la touche située en regard de l'étiquette de l'appelé (étape 118). Les moyens de numérotation 34 du module 8 délivrent des instructions codées au processeur 14 pour envoyer sur la paire téléphonique le numéro du poste appelé (étape 120). En fin d'émission des chiffres du numéro (décimaux ou multifréquence), l'émetteur du poste secrétaire envoie un message radio indiquant l'appel de Monsieur X par le poste du filtreur (étape 122).

La sonnerie du poste de Monsieur X est activée. Si Monsieur X décroche, la conversation est établie avec le filtreur (étapes 124, 126). Un transfert d'appel ou un relâchement est alors possible de façon classique (étape 128). Si Monsieur X ne décroche pas (occupé, ou absent), le filtreur est à nouveau en relation avec l'appelant.

On notera que tant que le filtreur n'a pas intercepté l'appel, le filtré peut prendre l'appel par simple décroché. On notera également qu'en cas d'occupation du filtré, il faut utiliser les possibilités d'attente sur occupation si le PABX et les postes possèdent ces fonctions ou bien il faut utiliser les possibilités d'intrusion.

## Revendications

1. Installation téléphonique comprenant :

- un autocommutateur privé (4) en particulier un PABX relié au réseau téléphonique et équipé d'une fonction d'interception d'appel,
- des postes intérieurs reliés par des liaisons intérieures (6) au PABX (4),
- des moyens additionnels d'intercommunication branchés entre le PABX (4) et des postes intérieurs privilégiés (2) pour procurer des fonctions téléphoniques évoluées,

caractérisée en ce que :

- lesdits moyens additionnels d'intercommunication comprennent un module de traitement (8) associé à chaque poste intérieur privilégié (2), muni d'un émetteur (16)-récepteur (18) ainsi que d'une antenne (20), pour l'échange de signalisation entre les postes privilégiés (2), et
- en ce que chaque poste privilégié (2) comporte au moins une touche supplémentaire dont l'actionnement met en marche ledit module (8) pour :

- détecter un courant de sonnerie délivré par le PABX (4) vers ledit poste privilégié (2) ;
- émettre en réponse à ce courant de sonnerie une signalisation sollicitant automatiquement et avec supervision au moins un autre poste pour intercepter l'appel.

2. Installation téléphonique selon la revendication 1, caractérisée en ce que ladite signalisation sollicite un poste dérivé, désignable à partir des touches du poste privilégié initial, par d'autres signalisations radioélectriques.

3. Installation téléphonique selon la revendication 2, caractérisée en ce que chaque poste privilégié comprend en outre des organes de visualisation (24) commandés en réponse auxdites signalisations radioélectriques pour indiquer l'état de filtrage de chacun des postes privilégié de l'installation ainsi que la sollicitation dudit poste dérivé.

4. Installation téléphonique selon l'une quelconque des précédentes revendications, caractérisée en ce que le module de traitement (8) de chaque poste privilégié comprend en outre des moyens de détection de courant d'occupation de ligne (12) propres, en réponse à ce courant, à commander les organes de visualisation (24) dudit poste pour indiquer son occupation et à émettre des signalisations radioélectriques pour indiquer l'état d'occupation dudit poste à chacun des autres postes privilégiés de l'installation.

5. Installation téléphonique selon la revendication 2, caractérisée en ce que les signalisations radioélectriques sont émises et reçues par l'émetteur (16)-récepteur (18) de chaque poste privilégié (2) selon un protocole de transmission avec multiplexage par division temporelle dans lequel un créneau de communication particulier est affecté à chacun des postes privilégiés (2).

FIG.1

EP 0 308 301 A1

FIG. 2

FIG. 3

FIG. 4

EP 0 308 301 A1

FIG.5

EP 0 308 301 A1

102 — appel M.X filtré

104 — courant de sonnerie vers porte X    (PABX)

106 — detection courant de sonnerie    (POSTE X)

108 — transmission message radio "poste X appelé"    (RADIO)

110 — visualisation sur tous les postes du groupe    (RADIO)

112 — sonnerie sur poste secrétaire (filtreur)    (RADIO)

114 — interception appel par un poste p du groupe (par ex. poste filtreur)    (fin PABX)

116 — dialogue    (communication)

fin 117

118 — appui touche dédiée    (RADIO)

120 — numérotation chiffrée

122 — transmission message radio "appel X par poste p (filtreur)"

124 — retour d'appel    occupé

libre

126 — proposition verbale transfert d'appel    refus

accord

128 — transfert d'appel    (PABX)

fin

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 413 158 (DANFORD)<br>* Figure 1; colonne 2, ligne 37 - colonne 3, ligne 27 *<br>--- | 1 | H 04 M 3/54<br>H 04 M 3/42 |
| A | US-A-4 150 257 (F.M. FENTON)<br>* Colonne 1, ligne 55 - colonne 2, ligne 6; colonne 4, ligne 67 - colonne 5, ligne 33 *<br>--- | 1 | |
| A | PHILIPS TELECOMMUNICATION REVIEW, vol. 40, no. 4, décembre 1982, pages 327-336, Hilversum, NL; F.L. JANSEN: "KT20 multi-function telephone terminals"<br>* Page 328, lignes 29-33; figure 2; page 334, ligne 10 - page 336, ligne 33 *<br>----- | 1 | |

DOMAINES TECHNIQUES RECHERCHES (Int. Cl.4)

H 04 M

Le présent rapport a été établi pour toutes les revendications

| Lieu de la recherche | Date d'achèvement de la recherche | Examinateur |
|---|---|---|
| LA HAYE | 30-11-1988 | VANDEVENNE M.J. |

EPO FORM 1503 03.82 (P0402)